# EUROPEAN PATENT APPLICATION

(11) **EP 2 955 216 A1**
(43) Date of publication of application: **16.12.2015**
(21) Application number: 14171956.7
(22) Date of filing: 11.06.2014
(51) Int. Cl.: C10G 45/02, C10G 47/00, C10G 67/02, B01D 1/14

(54) **Process for producing a middle distillate product**

(71) Applicant: SHELL INTERNATIONAL RESEARCH MAATSCHAPPIJ B.V., 2596 HR Den Haag (NL)
(72) Inventor: VAN DOESBURG, Edmundo Steven, 1031 HW Amsterdam (NL); JOHNSEN, Christian Gunther, 1031 HW Amsterdam (NL)
(74) Representative: Matthezing, Robert Maarten

(57) **Abstract**

The present invention relates to a process for producing a middle distillates product from a hydrocarbonaceous feedstock, comprising the steps of:
(a) subjecting at least part of the hydrocarbonaceous feedstcok to one or more hydroconversion treatments to produce at least a middle distillates fraction;
(b) subjecting at least part of the middle distillates fraction as obtained in step (a) to a stripping treatment to obtain at least a light hydroconverted product and a heavy hydroconverted product; and
(c) subjecting at least part of the heavy hydroconverted product as obtained in step (b) to a separation treatment in a separation zone which is carried out under reduced pressure to form at least a naphtha product comprising hydrocarbons having an atmospheric boiling point in the range of from 30-200 °C and a middle distillates product comprising hydrocarbons having an atmospheric boiling point in the range of from 120-500 °C.

## Description

### Field of the Invention

The present invention relates to process for producing a middle distillates product. In particular, it relates to a process for producing a middle distillates product from a hydrocarbonaceous feedstock that comprises sulphur compounds.

### Background of the Invention

It is known to produce low sulphur middle distillates by hydrodesulphurising a hydrocarbon distillate stream boiling in the gasoil boiling range.

In such a hydrodesulphurisation process a hydrocarbonaceous feedstock is contacted with hydrogen under hydrodesulphurisation conditions. The liquid product is subjected to a stripping treatment where hydrogen and other gaseous components are separated from the hydrodesulphurisation product. The stripping treatment is followed by a separation step at reduced pressure to obtain a naphtha product and a middle distillates product.

In view of the increasing demand for low sulphur middle distillates, in particular kerosene, it is the object of the present invention is to provide a process for producing middle distillates having low sulphur contents in a higher yield.

### Summary of the invention

This object is achieved when use is made of a particular sequence of process steps.

Accordingly, the present invention relates to a process for producing a middle distillates product from a hydrocarbonaceous feedstock, comprising the steps of:
(a) subjecting at least part of the hydrocarbonaceous feedstock to one or more hydroconversion treatments to produce at least a middle distillates fraction;
(b) subjecting at least part of the middle distillates fraction as obtained in step (a) to a stripping treatment to obtain at least a light hydroconverted product and a heavy hydroconverted product; and
(c) subjecting at least part of the hydroconverted product as obtained in step (b) to a separation treatment in a separation zone which is carried out under reduced pressure to form at least a naphtha product comprising hydrocarbons having an atmopheric boiling point in the range of from 30-200 °C and a middle distillates product comprising of hydrocarbons having an atmospheric boiling point in the range of from 120-500 °C.

In accordance with the present invention higher yields of middle distillates containing low amounts of sulphur can advantageously be produced from hydrocarbonaceous feedstocks. In addition, a high quality naphtha product is obtained.

### Detailed description of the invention

In step (a), a hydrocarbonaceous feedstock is subjected to one or more hydroconversion treatments to produce at least a middle distillates fraction. The hydrocarbonaceous feedstock can be selected from a variety of hydrocarbon-containing streams and fractions. The hydrocarbonaceous feedstock can be a straight run fraction of a crude oil, a fraction after vacuum fractionation, a deasphalted oil, an oil originating from tar sands or shale oil. The hydrocarbonaceous feedstock may be derived from a conversion process. Such a conversion process can be a hydrofinishing process in which the oil is marginally changed, it may be a hydrocracking, catalytic cracking or thermal cracking process in which the average chain length of the oil molecules is reduced, it may be a hydrodemetallisation process in which metal components are removed from the hydrocarbonaceous feedstock, it may be a hydrogenation process in which unsaturated hydrocarbons are hydrogenated saturated, it may be a hydrodewaxing process in which straight chain molecules are isomerised, or it may be a hydrodesulphurisation process in which sulphur compounds are removed from the feedstock. The hydrocarbonaceous feedstock can be selected from a variety of hydrocarbon-containing streams and fractions.

In step (a), at least part of the heavy hydrocarbonaceous fraction is subjected to one or more hydroconversion treatments to produce at least a middle distillates fraction. Preferably, the one or more hydroconversion treatments are carried out under hydrotreating conditions, more preferably hydrodesulphurisation conditions. The hydrotreating conditions that can be applied in the process of the present invention are not critical and can be adjusted to the type of conversion to which the hydrocarbonaceous feedstock is being subjected.

Generally, the hydrotreating conditions comprise a temperature ranging from 250 to 480 °C, preferably from 320 to 400 °C, a pressure from 10 to 150 bar, preferably 20 to 90 bar, and a weight hourly space velocity of from 0.1 to 10 hr⁻¹, preferably from 0.4 to 4 hr⁻¹. The skilled person will be able to adapt the conditions in accordance with the type of feedstock and the desired conversion.

The catalyst used in the present process can also be selected in accordance with the desired conversion. Suitable catalysts comprise at least one Group VB, VIB and/or VIII metal of the Periodic Table of the Elements on a suitable carrier. Examples of suitable metals include cobalt, nickel, molybdenum and tungsten, but also noble metals may be used such as palladium or platinum. Especially when the hydrocarbonaceous feedstock comprises sulphur, the catalyst suitably contains a carrier and at least one Group VIB and a Group VIII metal. Whereas these metals can be present in the form of their oxides, it is preferred to use the metals in the form of their sulphides. Since the catalyst may normally be produced in their oxidic form the catalysts may subsequently be subjected to a pre-sulphiding treatment which can be carried out ex situ, but is conducted preferably in-situ, in particular under circumstances that resemble the actual conversion. The metals are suitably combined on a carrier. The carrier may be an amorphous refractory oxide, such as silica, alumina or silica alumina. Also other oxides, such as zirconia, titania or germania can be used. For hydrodewaxing processes, crystalline aluminosilicates, such as zeolite beta, ZSM-5, mordenite, ferrierite, ZSM- 11, ZSM-12, ZSM-23 and other medium pore zeolites, can be used. When the hydrotreating conditions entail hydrocracking, the catalyst may advantageously comprise a different zeolite. Suitable zeolites are of the faujasite type, such as zeolite X or Y, in particular ultra-stable zeolite Y. Other, preferably large pore, zeolites are also possible. The zeolites are generally combined with an amorphous binder, such as alumina. The metals are suitably combined with the catalyst by impregnation, soaking, co-mulling, kneading or, additionally in the case of zeolites, by ion exchange. It is evident that the skilled person will know what catalysts are suitable and how such catalysts can be prepared.

After the contact of the feedstock with the catalyst and hydrogen a hydrotreated product is obtained which comprises at least a middle distillates fraction. This middle distillates fraction contains unconverted hydrogen, and may, depending on the hydrotreating conditions, contain hydrocarbons with the same or fewer carbon atoms than in the hydrocarbons that were present in the feedstock, and/or hydrogen sulphide, ammonia and other gaseous compounds. To remove these gaseous compounds, the middle distillates fraction as obtained in step (a) is subjected to a stripping treatment.

Preferably, the entire middle distillates fraction as obtained in step (a) is subjected to the stripping treatment in step (b).

In step (b), at least part of the middle distillates fraction as obtained in step (a) is subjected to a stripping treatment to obtain at least a light hydroconverted product and a heavy hydroconverted product.
The light hydroconverted product typically contains hydrogen and optionally other gaseous products such as hydrogen sulphide, ammonia and other gaseous components such as hydrocarbons with 1 to 6 carbon atoms. The heavy hydroconverted product suitable comprises hydrocarbons boiling in the range of from 50-500 °C, depending on the heaviness of the hydrocarbonaceous feedstock to be used.

In the stripping treatment volatile hydrocarbons and impurities such as hydrogen sulphide and ammonia are separated from the desired liquid hydrocarbons. The stripping treatment may be conducted with nitrogen, hydrogen, carbon dioxide or low- molecular weight hydrocarbons as stripping gas. However, it is preferred to carry out the stripping treatment with steam. Typically, steam is readily available in refineries at different pressures and different temperatures. Moreover, stripping with steam has proven to be very efficient. It is convenient to conduct the stripping treatment at conditions that are most advantageous relative to the conditions at which the light hydroconverted product stream is transported or at which light hydrocarbons can be optimally stripped off. Suitably the stripping is conducted at a temperature ranging from 100 to 350 °C, preferably from 130 to 240 °C and a pressure ranging from 1 to 50, preferably from 1.5 to 10 bar. The light hydroconverted product may contain stripping gas. When the stripping gas is steam it is advantageous to cool the gaseous stripped fraction to condense the steam. This is an easy way to remove the steam from the light hydroconverted product. An additional advantage of this method resides in the option to condense also the heavier hydrocarbon fraction that is being entrained with the stripping gas. This is typically a naphtha fraction. The naphtha fraction may be at least partly recovered as product and/or partly recycled to the fractionator as reflux.

In step (c), at least part of the heavy hydroconverted product as obtained in step (b) is subjected to a separation treatment in a separation zone which is carried out under reduced pressure to form at least a naphtha product comprising hydrocarbons having an atmospheric boiling point in the range of from 30-200 °C and a middle distillates product comprising hydrocarbons having an atmospheric boiling point in the range of from 120-500 °C.

The heavy hydroconverted product that is obtained in step (b) after the stripping treatment may contain some stripping gas, e.g., water, and, possibly, an undesirable amount of relatively light, e.g. naphtha, hydrocarbon components. This stripping gas and optionally these light hydrocarbon components are advantageously removed from the heavy hydroconverted product since the stripping gas the light hydrocarbon components may dilute the desired product and may interfere with the middle distillates specifications. Suitably, the separation in step (c) may be carried out in a flash vessel wherein the heavy hydroconverted product is exposed to a reduced pressure. Although this separation method may be satisfactory for some applications, a more strict separation between various hydrocarbon fractions may be desired. Therefore, the separation is, preferably, effected in a fractionation column provided with a fractionation section above the hydroconverted product entry, which is exposed to a reduced pressure, whereby the more volatile components, including the stripping gas and optionally relatively light hydrocarbon components, will evaporate and can be withdrawn from the column as a gaseous stripped fraction. The heavier compounds will remain liquid and can be withdrawn as the second fraction of hydrocarbons. The gaseous stripped overhead fraction is subsequently condensed. This condensed fraction is typically a naphtha product. The naphtha product may be at least partly recovered as product and/or partly recycled to the fractionator as reflux thereby improving the separation and middle distillates yield.
The conditions in such a separation step, such as flashing vessel or fractionation column, include suitably a temperature of 80 to 300 °C, preferably from 120 to 250 °C, more preferably from 120 to 200 °C and even more preferably from 150 to 200 °C and a pressure ranging from 0.005 to 1 bar, preferably from 0.05 to 0.5 bar, more preferably from 0.15 to 0.5 bar.

Although the use of a fractionation column or flashing vessel has been illustrated, it is evident that also other separation methods, operating at reduced pressure, can be applied.

Preferably, the separation zone in step (c) comprises a rectifying section.

Preferably, at least part of the first fraction of hydrocarbons having an atmospheric boiling point in the range of from 30-200 °C as obtained in step (c) are recycled to the separation zone in step (c).

In step (c), a middle distillates product is recovered which comprises at least part of the hydrocarbons having an atmospheric boiling point in the range of from 120-500 °C. Suitable products include kerosene and diesel.

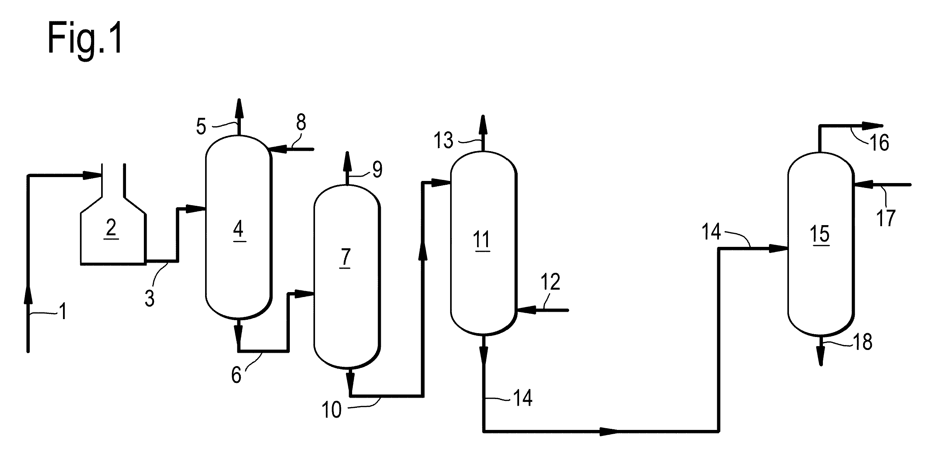

Figure 1 shows a simplified flow scheme of an embodiment of the present invention.

Figure 1 shows a line 1 via which a hydrocarbonaceous feedstock is passed through a heat exchanger and the combined feedstock is passed through a furnace 2 and the heated feedstock is passed via a line 3 to hydrotreating reactor 4 to which a hydrogen containing gas is added via a line 8. The reactor can be provided with one or more catalyst beds. When the reactor contains two or more catalyst beds, quench gas or a quench liquid may be introduced between the catalyst beds.
The reactor effluent stream is withdrawn via line 6 and is passed to a separator vessel 7 where a large portion of the gaseous products such as hydrogen, hydrogen sulphide and ammonia, are removed and withdrawn via a line 9, and a liquid hydrotreated middle distillate product stream is obtained via a line 10. The liquid hydrotreated middle distillates fraction is then passed to a stripping column 11 in which a stripping gas such as steam is fed via a line 12. The stripping gas will entrain gaseous contaminants such as hydrogen sulphide and ammonia, as well as light hydrocarbons, such as hydrocarbons with 1 to 6 carbon atoms. These gaseous components in the form of a light hydroconverted product are withdrawn via a line 13, and a heavy hydroconverted product is withdrawn via a line 14 and passed to separation column 15. In the separation column 15, which operates at a reduced pressure lower than the one prevailing in line 14, the heavy hydroconverted product is separated in a first fraction of hydrocarbons having an atmospheric boiling point in the range of from 30-200 °C that leaves the separation column 15 via a line 16. The gaseous fraction in the line 16 is further treated. A suitable treatment includes a cooling of the gaseous stripped fraction to condense part of the gaseous stripped fraction. The condensate may comprise water, when steam is used as stripping gas, and relatively light hydrocarbon components. These can be separated, and water may be removed from the system. The relatively light hydrocarbon components can be at least partly recovered as a naphtha product or partly recycled to the fractionation column as reflux via line 17.
The second fraction of hydrocarbons is withdrawn from separation column 15 via a line 18 as a middle distillates product.

## Claims

1. A process for producing a middle distillates product from a hydrocarbonaceous feedstock, comprising the steps of:
(a) subjecting the hydrocarbonaceous feedstock to one or more hydroconversion treatments to produce at least a middle distillates fraction;
(b) subjecting at least part of the middle distillates fraction as obtained in step (a) to a stripping treatment to obtain at least a light hydroconverted product and a heavy hydroconverted product; and
(c) subjecting at least part of the heavy hydroconverted product as obtained in step (b) to a separation treatment in a separation zone which is carried out under reduced pressure to form at least a naphtha product comprising hydrocarbons having an atmospheric boiling point in the range of from 30-200 °C and a middle distillates product comprising hydrocarbons having an atmospheric boiling point in the range of from 120-500 °C.

2. The process according to claim 1, wherein the separation zone in step (c) comprises a rectifying section.

3. The process according to any one of claims 1-2, wherein the stripping treatment in step (b) is carried out with steam.

4. The process according to any one of claims 2-3, wherein the stripping treatment is carried out at a temperature in the range of from 100-350 °C and a pressure in the range of from 1 to 50 bara.

5. The process according to any one of claims 2-4, wherein the separation zone in step (c) is a fractionation column wherein the conditions include a temperature in the range of from 80-300 °C and a pressure in the range of from 0.005 to 1 bara.

6. The process according to any one of claims 1-5, wherein at least part of the naphtha product comprising hydrocarbons having an atmospheric boiling point in the range of from 30-200 °C as obtained in step (c) are recycled to the separation zone in step (c).

7. The process according to any one of claims 1-6, wherein the one or more hydroconversion treatments in step (a) comprise at least one hydrotreatment.
